# EUROPEAN PATENT APPLICATION

(11) **EP 4 480 980 A1**
(43) Date of publication of application: **25.12.2024**
(21) Application number: 23756258.2
(22) Date of filing: 08.02.2023
(51) Int. Cl.: C08G 18/34, C08G 73/14, D01D 5/04, D01F 6/60, D01F 6/80, D04H 1/549, D04H 1/728, H01G 11/52, H01G 11/84

(54) **POLYAMIDIMIDE RESIN, POLYAMIDIMIDE FIBERS, NON-WOVEN FABRIC AND ELECTRONIC COMPONENT SEPARATOR**

(30) Priority: 18.02.2022 JP 2022023805
(71) Applicant: TOYOBO MC Corporation, Osaka 530-0001 (JP)
(72) Inventor: IRISAWA Hayato, Otsu-shi, Shiga 520-0292 (JP)
(74) Representative: Müller-Boré & Partner Patentanwälte PartG mbB
(86) International application number: PCT/JP2023/004187
(87) International publication number: WO 2023/157732

(57) **Abstract**

Problem: To provide a polyamide-imide resin that enables stable spinning of a nanofiber having a small diameter, a polyamide-imide fiber formed from the polyamide-imide resin, and a nonwoven fabric including the polyamide-imide fiber. Solution: A polyamide-imide resin including a constitutional unit derived from an organic acid salt compound.

## Description

### TECHNICAL FIELD

The present invention relates to a polyamide-imide resin, more specifically to a polyamide-imide resin, a polyamide-imide fiber spun from the polyamide-imide resin, a nonwoven fabric, a separator for an electronic component, and a method for producing the nonwoven fabric.

### BACKGROUND ART

Conventionally, nanofibers with a fiber diameter of 1 µm or less, have widely been investigated. Methods for producing aggregates of fibers having a small fiber diameter include conjugate spinning method, high-speed spinning method, and electrospinning method. Among them, electrospinning method allows for spinning with fewer steps and greater simplicity compared to other methods. The electrospinning method involves applying a high voltage to a liquid (such as a solution containing a polymer capable of forming a fiber or a molten polymer), thereby imparting a charge to the liquid, and the charged liquid is drawn toward a counter electrode material to form a fiber. Typically, a polymer capable of forming a fiber is drawn from a solution and forms a fiber before collection on a counter electrode material. Fiber formation occurs through processes such as solvent volatilization in the case of using a solution containing a polymer capable of forming a fiber, and cooling or chemical hardening (treatment with curing steam) in the case of using a molten polymer. Fibers thus formed may be collected and stacked on a collecting substrate provided as needed for obtaining a laminate, or the collected fibers may be separated from the collecting substrate, if needed, to be used as a fiber aggregate. Unlike the other methods, the electrospinning method enables direct production of fiber aggregation in the form of a nonwoven fabric without fiber spinning prior to the formation of fiber aggregation, hence the electrospinning method has an advantage of easy operation. Patent Document 1 discloses a technique for producing a nonwoven fabric suitable as a separator for electronic component and a heat-resistant filter from a composition containing a polyamide-imide resin and dimethylformamide by electrospinning method.

Non-Patent Document 1 investigates and reports the viscosity and the concentration of a resin solution used in spinning, and their effects on a fiber diameter and the formation of liquid droplets called bead in a fiber in electrospinning method.

Patent Document 2 discloses a method for forming an ultrafine nanofiber by adding an organic quaternary ammonium salt to a spinning solution containing a polyamide-imide resin.

### PRIOR ART DOCUMENTS

### PATENT DOCUMENTS

Patent Document 1: JP-A-2019-026771
Patent Document 2: JP-B2-5246652

### NON-PATENT DOCUMENT

Non-Patent Document 1: Polymer, 46, 3372 (2005)

### SUMMARY OF THE INVENTION

### PROBLEMS TO BE SOLVED BY THE INVENTION

In recent years, for electronic component separators, in addition to fundamental heat resistance, the reduction of a fiber dimeter is increasingly demanded as it contributes to the improvement of battery capacity and output by increasing high porosity and reducing film thickness. One method that can meets the requirements is the spinning of a nonwoven fabric using the above-mentioned electrospinning method.

Methods commonly known for reducing fiber diameter such as decreasing solution viscosity and lowering solution concentration have the drawback of easy formation of bead which can lead to reduced membrane strength and affect the residual solvent. The method disclosed in Patent Document 2 involves the addition of an organic salt or an inorganic salt, but the addition of the salts affects molecular interactions and thus causes an increase in the solution viscosity, leading to nozzle blockage during electrospinning.

It is an object of the present invention to provide a polyamide-imide resin capable of spinning a nanofiber having a smaller diameter, a polyamide-imide fiber formed from the polyamide-imide resin, and a nonwoven fabric including the polyamide-imide fiber.

### SOLUTION TO THE PROBLEMS

As a result of earnest studies, the present inventors have found that a polyamide-imide resin described below can solve the above problems, and have completed the present invention. The present invention has the following features.

[1] A polyamide-imide resin comprising a constitutional unit derived from an organic acid salt compound.
[2] The polyamide-imide resin according to [1], wherein a content of the constitutional unit derived from an organic acid salt compound is from 0.1 mol% to 25 mol% based on 100 mol% of the total constitutional units of the polyamide-imide resin.
[3] The polyamide-imide resin according to [1] or [2], wherein the organic acid salt compound is a metal organic acid salt compound.
[4] The polyamide-imide resin according to [1] or [2], wherein the organic acid salt compound is a sulfonic acid metal salt compound.
[5] The polyamide-imide resin according to claim [1] or [2], wherein the organic acid salt compound is a 3,5-dicarboxybenzenesulfonic acid metal salt.
[6] The polyamide-imide resin according to any one of [1] to [5], wherein the polyamide-imide resin has a number average molecular weight of 7000 or more and 30000 or less.
[7] A polyamide-imide fiber spun from the polyamide-imide resin according to any one of [1] to [6].
[8] A nonwoven fabric comprising the polyamide-imide fiber according to [7] as a constitutional material.
[9] A separator for electronic component including the nonwoven fabric according to [8].
[10] A method for producing a nonwoven fabric, wherein the nonwoven fabric is formed by spinning a solution dissolving a polyamide-imide resin containing a constitutional unit derived from an organic acid salt compound and an organic solvent by electrospinning method to form polyamide-imide fibers and collecting the polyamide-imide fibers on a collection plate.

### EFFECTS OF THE INVENTION

The polyamide-imide resin of the present invention enables stable spinning of a nanofiber having a smaller fiber diameter by electrospinning method. Hence, for example, the separator for electronic component including the nonwoven fabric made from the polyamide-imide fiber can achieve high porosity and thickness reduction, allowing for an increase in the battery capacity and output.

### BRIEF DESCRIPTION OF DRAWING

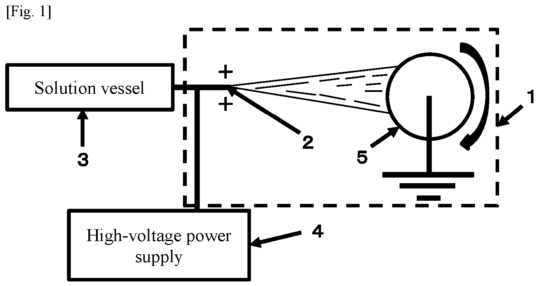

[Fig. 1] Fig. 1 is a schematic cross-sectional view illustrating an electrospinning apparatus.

### DESCRIPTION OF EMBODIMENTS

The following is a description of embodiments of the present invention. The present invention is not limited to the following embodiments, and may be carried out with various modifications made within the scope of the description.

### <Polyamide-imide resin>

A polyamide-imide resin is a resin having at least one imide bond and at least one amide bond in a repeating unit. The polyamide-imide resin of the present invention contains a constitutional unit derived from an organic acid salt compound. By containing a constitutional unit derived from an organic acid salt compound, nozzle blockage and bead formation can be prevented during spinning of the polyamide-imide resin by electrospinning method, enabling stable production of a nanofiber having a smaller fiber diameter.

The organic acid salt compound is used to introduce an organic acid salt into the polyamide-imide resin and is a component having a functional group including an organic acid salt as well as a functional group capable of reacting with another monomer component forming the polyamide-imide resin. Examples of the organic acid that forms the organic acid salt include carboxylic acid and sulphonic acid. Examples of the salt that form the organic acid salt include metal salts such as a sodium salt, a potassium salt, and a lithium salt; and onium salts such as a phosphonium salt and an ammonium salt. Among them, the organic acid is preferably sulphonic acid from the viewpoint of availability and reactivity with another monomer component.

Examples of the organic acid salt compound include sulfonic acid metal salts such as sodium 3,5-dicarboxybenzenesulfonate (byname: sodium 5-sulfoisophthalate, hereinafter merely "SSIPA"), potassium 3,5-dicarboxybenzenesulfonate, lithium 3,5-dicarboxybenzenesulfonate, sodium 3,5-di(β-hydroxyethoxycarbonyl)benzenesulfonate, potassium 3,5-di(β-hydroxyethoxycarbonyl)benzenesulfonate, lithium 3,5-di(β-hydroxyethoxycarbonyl)benzenesulfonate, sodium 2,6-dicarboxynaphthalene-4-sulfonate, sodium 2,6-dicarboxynaphthalene-4,8-disulfonate, sodium 2,5-bis(hydroxyethoxy)benzenesulfonate, potassium 2,5-bis(hydroxyethoxy)benzenesulfonate, and α-sodium sulfosuccinate; phosphonium sulfonates such as tetrabutylphosphonium 3,5-dicarboxybenzenesulfonate, ethyltributylphosphonium 3,5-dicarboxybenzenesulfonate, benzyltributylphosphonium 3,5-dicarboxybenzenesulfonate, phenyltributylphosphonium 3,5-dicarboxybenzenesulfonate, tetraphenylphosphonium 3,5-dicarboxybenzenesulfonate, butyltriphenylphosphonium 3,5-dicarboxybenzenesulfonate, benzyltriphenylphosphonium 3,5-dicarboxybenzenesulfonate, ethyltriphenylphosphonium 3,5-dicarboxybenzenesulfonate, tetrabutylphosphonium 3-dicarboxybenzenesulfonate, tetraphenylphosphonium 3-carboxybenzenesulfonate, tetrabutylphosphonium 3,5-di(β-hydroxyethoxycarbonyl)benzenesulfonate, tetraphenylphosphonium 3,5-di(β-hydroxyethoxycarbonyl)benzenesulfonate, tetrabutylphosphonium 3-(β-hydroxyethoxycarbonyl)benzenesulfonate, tetraphenylphosphonium 3-(β-hydroxyethoxycarbonyl)benzenesulfonate, tetrabutylphosphonium 4-hydroxyethoxybenzenesulfonate, tetrabutylphosphonium 2,6-dicarboxynaphthalene-4-sulfonate, and α-tetrabutylphosphonium sulfosuccinate. In addition, a biomass-derived raw material from biomass resource may also be used. These compounds may be used alone or in combination.

The polyamide-imide resin contains the constitutional unit derived from an organic acid salt compound in an amount of preferably 0.1 mol% or more, more preferably 1 mol% or more, and further preferably 2 mol% or more based on 100 mol% of the total constitutional units of the polyamide-imide resin. The amount is preferably 25 mol% or less, more preferably 20 mol% or less, and further preferably 10 mol% or less. When the organic acid salt compound is in an amount of 0.1 mol% or more, the amount of electric charge increases with an increase in ion concentration in electrospinning, and a fiber diameter can be reduced. When the amount is 25 mol% or less, it helps suppressing rapid charge relaxation caused by excessively high ion concentration. Specifically, it helps preventing nozzle blockage and bead formation, enabling stable and continuous spinning.

As other monomer components constituting the polyamide-imide resin, a component forming an amide group and an imide group includes polycarboxylic acid derivative component containing acid anhydride groups and may include isocyanate components or amine components as copolymerization components.

Optionally, a carboxylic acid component without acid anhydride group and a glycol component may also be used. If a glycol component is used as a copolymerization component, the resulting resin becomes a polyamide-imide urethane resin.

The polycarboxylic acid derivative component with acid anhydride group is not particularly limited and is exemplified by alkylene glycol bis-anhydro trimellitates such as trimellitic anhydride (TMA), 2,2-bis[4-(3,4-dicarboxyphenoxy)phenyl]propane dianhydride (BisDA), p-phenylenebis(trimellitate anhydride), 4,4'-(hexafluoroisopropylidene)diphthalic anhydride, 2,2-bis[4-(2,3-dicarboxyphenoxy)phenyl]propane dianhydride, pyromellitic dianhydride, ethylene glycol bis-anhydro trimellitate, propylene glycol bis-anhydro trimellitate, 1,4-butanediol bis-anhydro trimellitate, hexamethylene glycol bis-anhydro trimellitate, polyethylene glycol bis-anhydro trimellitate, and polypropylene glycol bis-anhydro trimellitate; derivatives of aromatic polycarboxylic acids such as 3,3',4,4'-benzophenonetetracarboxylic dianhydride, 3,3',4,4'-biphenyltetracarboxylic dianhydride, 1,2,5,6-naphthalenetetracarboxylic dianhydride, 1,4,5,8-naphthalenetetracarboxylic dianhydride, 2,3,5,6-pyridinetetracarboxylic dianhydride, 3,4,9,10-perylenetetracarboxylic dianhydride, 3,3',4,4'-diphenylsulfonetetracarboxylic dianhydride, m-terphenyl-3,3',4,4'-tetracarboxylic dianhydride, 4,4'-oxydiphthalic dianhydride, 1,1,1,3,3,3-hexafluoro-2,2-bis(2,3- or 3,4-dicarboxyphenyl)propane dianhydride, 2,2-bis(2,3- or 3,4-dicarboxyphenyl)propane dianhydride, 1,1,1,3,3,3-hexafluoro-2,2-bis[4-(2,3- or 3,4-dicarboxyphenoxy)phenyl]propane dianhydride, and 1,3-bis(3,4-dicarboxyphenyl)-1,1,3,3-tetramethyldisiloxane dianhydride; and derivatives of aliphatic or alicyclic polycarboxylic acids such as butane-1,2,3,4-tetracarboxylic dianhydride, pentane-1,2,4,5-tetracarboxylic dianhydride, cyclobutanetetracarboxylic dianhydride, hexahydropyromellitic dianhydride, cyclohex-1-ene-2,3,5,6-tetracarboxylic dianhydride, 3-ethylcyclohex-1-ene-3-(1,2),5,6-tetracarboxylic dianhydride, 1-methyl-3-ethylcyclohexane-3-(1,2),5,6-tetracarboxylic dianhydride, 1-methyl-3-ethylcyclohex-1-ene-3-(1,2),5,6-tetracarboxylic dianhydride, 1-ethylcyclohexane-1-(1,2),3,4-tetracarboxylic dianhydride, 1-propylcyclohexane-1-(2,3),3,4-tetracarboxylic dianhydride, 1,3-dipropylcyclohexane-1-(2,3),3-(2,3)-tetracarboxylic dianhydride, dicyclohexyl-3,4,3',4'-tetracarboxylic dianhydride, bicyclo[2,2,1]heptane-2,3,5,6-tetracarboxylic dianhydride, bicyclo[2,2,2]octane-2,3,5,6-tetracarboxylic dianhydride, bicyclo[2,2,2]oct-7-ene-2,3,5,6-tetracarboxylic dianhydride, and hexahydrotrimellitic anhydride. In addition, a biomass-derived raw material from biomass resource may also be used. These compounds may be used alone or in combination.

A carboxylic acid component without acid anhydride group is not particularly limited, and is exemplified by tetracarboxylic acids such as pyromellitic acid, biphenyltetracarboxylic acid, biphenylsulfone tetracarboxylic acid, benzophenone tetracarboxylic acid, biphenyl ether tetracarboxylic acid, ethylene glycol bistrimellitate, and propylene glycol bistrimellitate; tricarboxylic acids such as trimesic acid and trimellitic acid; aliphatic dicarboxylic acids such as oxalic acid, adipic acid, malonic acid, sebacic acid, succinic acid, azelaic acid, dodecanedicarboxylic acid, dicarboxypolybutadiene, dicarboxypoly(acrylonitrile-butadiene), and dicarboxypoly(styrene-butadiene); alicyclic dicarboxylic acids such as 1,4-cyclohexanedicarboxylic acid, 1,3-cyclohexanedicarboxylic acid, 4,4'-dicyclohexylmethanedicarboxylic acid, and dimer acid; and aromatic dicarboxylic acids such as terephthalic acid, isophthalic acid, diphenyl sulfonedicarboxylic acid, diphenyl ether dicarboxylic acid, and naphthalenedicarboxylic acid. In addition, biomass-derived raw materials from biomass resource, such as adipic acid, sebacic acid, succinic acid, terephthalic acid, and bisfuran dicarboxylic acid, may also be used. These compounds may be used alone or in combination.

The glycol component is not particularly limited, and examples of the glycol component include alkylene glycols such as ethylene glycol, propylene glycol, tetramethylene glycol, neopentyl glycol, hexanediol, and dimer diol; polyalkylene glycols such as polyethylene glycol, polypropylene glycol, polytetramethylene glycol, and polybutadiene diol; and polyesters synthesized from one or two or more of the above dicarboxylic acids and one or two or more of the above glycols and having a terminal hydroxyl group. In addition, biomass-derived raw materials from biomass resource, such as 1,3-propanediol and 1,10-decanediol, may also be used. These compounds may be used alone or in combination.

The diisocyanate component is not particularly limited, and examples of the diisocyanate component include aromatic diisocyanates such as diphenylmethane-2,4'-diisocyanate, 3,2'-, 3,3'-, 4,2'-, 4,3'-, 5,2'-, 5,3'-, 6,2'-, or 6,3'-dimethyldiphenylmethane-2,4'-diisocyanate, 3,2'-, 3,3'-, 4,2'-, 4,3'-, 5,2'-, 5,3'-, 6,2'-, or 6,3'-diethyldiphenylmethane-2,4'-diisocyanate, 3,2'-, 3,3'-, 4,2'-, 4,3'-, 5,2'-, 5,3'-, 6,2'-, or 6,3'-dimethoxydiphenylmethane-2,4'-diisocyanate, diphenylmethane-4,4'-diisocyanate (MDI), diphenylmethane-3,3'-diisocyanate, diphenylmethane-3,4'-diisocyanate, diphenyl ether-4,4'-diisocyanate, benzophenone-4,4'-diisocyanate, diphenyl sulfone-4,4'-diisocyanate, tolylene-2,4-diisocyanate, tolylene-2,6-diisocyanate, m-xylylene diisocyanate, p-xylylene diisocyanate, naphthalene-2,6-diisocyanate, 4,4'-(2,2-bis(4-phenoxyphenyl)propane)diisocyanate, 3,3'- or 2,2'-dimethylbiphenyl-4,4'-diisocyanate, 3,3'- or 2,2'-diethylbiphenyl-4,4'-diisocyanate, 3,3'-dimethoxybiphenyl-4,4'-diisocyanate, 3,3'-diethoxybiphenyl-4,4'-diisocyanate, and 1,4-phenylene diisocyanate; aliphatic diisocyanates such as hexamethylene diisocyanate; and alicyclic diisocyanates such as norbornane diisocyanate and isophorone diisocyanate. In addition, biomass-derived raw materials from biomass resource, such as bisfuran diisocyanate, may also be used. Aromatic diisocyanates are preferred from the viewpoint of heat resistance, and diphenylmethane-4,4'-diisocyanate (MDI), tolylene-2,4- or tolylene-2,6-diisocyanate (TDI), and 3,3'- dimethylbiphenyl-4,4'-diisocyanate (ToDI) are more preferred from the viewpoint of heat resistance and solubility. These compounds may be used alone or in combination.

The diamine component is not particularly limited, and examples of the diamine component include aliphatic diamines such as ethylenediamine, propylenediamine, and hexamethylenediamine; alicyclic diamines such as 1,4-cyclohexanediamine, 1,3-cyclohexanediamine, isophorone diamine, and 4,4'-dicyclohexylmethanediamine; aromatic diamines such as m-phenylenediamine, p-phenylenediamine, 4,4'-diaminodiphenylmethane, 4,4'-diaminodiphenyl ether, 4,4'-diaminodiphenyl sulfone, benzidine, o-tolidine, 2,4-tolylenediamine, 2,6-tolylenediamine, and xylylenediamine. In addition, a biomass-derived raw material from biomass resource can also be used. Among them, 4,4'-diaminodiphenylmethane and o-tolidine are preferred from the viewpoint of reactivity. These compounds may be used alone or in combination.

The polyamide-imide resin of the present invention has a number average molecular weight of preferably 7000 or more and 30000 or less, more preferably 8000 or more, and further preferably 9000 or more. In addition, the number average molecular weight is more preferably 28000 or less, and further preferably 25000 or less. When the polyamide-imide resin has a number average molecular weight of 7000 or more, the nonwoven fabric can have enhanced mechanical characteristics and a fiber without beads can be formed by electrospinning. When the polyamide-imide resin has a number average molecular weight of 30000 or less, the solution can have adequate viscosity and the entanglement of molecular chains become moderate, leading to the reduction of the fiber diameter and making it easier to achieve stable spinning without nozzle clogging.

### <Production of polyamide-imide resin>

The polyamide-imide resin of the present invention can be produced by methods known in the art for manufacturing polyamide-imide resin. For example, a desired polyamide-imide resin can be produced by charging a reaction chamber with the various raw material components described above, a polymerization catalyst, and a polymerization solvent and dissolving them, then reacting them at a predetermined reaction temperature for 2 hours or more under nitrogen gas flow with stirring, and diluting the reaction product with a polymerization solvent to a suitable viscosity, followed by cooling. Methods for manufacturing the polyamide-imide resin include an acid chloride method using an acid chloride and amine, a direct method using an acid anhydride and amine, and an isocyanate method using an acid anhydride and isocyanate. The use of amines in a method requires the formation of amic acid intermediates, making the isocyanate method advantageous in industrial applications.

In the inventive method for producing the polyamide-imide resin, the molar ratio of the use amount of the diisocyanate and diamine components with respect to the use amount of the acid and glycol components is preferably from 0.90 to 1.20, and more preferably from 0.95 to 1.15. The molar ratio equal to or greater than the lower limit can increase the molecular weight of the polyamide-imide resin. The molar ratio equal to or lower than the upper limit can prevent gelation and a side reaction during polymerization of the polyamide-imide resin.

A solvent capable of dissolving a solute of a raw material and having low reactivity with an isocyanate group can be preferably used as a solvent for polymerizing the polyamide-imide resin of the present invention. Examples of the solvent include toluene, xylene, ethylbenzene, nitrobenzene, cyclohexane, isophorone, diethylene glycol dimethyl ether, ethylene glycol diethyl ether, propylene glycol methyl ether acetate, propylene glycol ethyl ether acetate, dipropylene glycol methyl ether acetate, diethylene glycol ethyl ether acetate, methyl methoxypropionate, ethyl methoxypropionate, methyl ethoxypropionate, ethyl ethoxypropionate, ethyl acetate, n-butyl acetate, isoamyl acetate, ethyl lactate, acetone, methyl ethyl ketone, cyclohexanone, N,N-dimethylformamide, N,N-dimethylacetamide, N-methylpyrrolidone, N-ethylpyrrolidone, γ-butyrolactone, dimethyl sulfoxide, chloroform, and methylene chloride. These may be used alone or in combination. Among them, N,N-dimethylacetamide (DMAc), N-methylpyrrolidone (NMP), N-ethylpyrrolidone (NEP), γ-butyrolactone (GBL), and cyclohexanone (CHX) are preferred as polymerization solvents from the viewpoint of reactivity and solubility. More preferred is N,N-dimethylacetamide (DMAc) from the viewpoint of high volatility and reactivity.

In the production of the polyamide-imide resin, the polymerization reaction can be carried out in the presence of a catalyst exemplified by amines such as triethylamine, lutidine, picoline, undecane, triethylenediamine (1,4-diazabicyclo[2,2,2]octane), and DBU (1,8-diazabicyclo[5,4,0]-7-undecene); alkali metal or alkaline earth metal compounds such as lithium methoxide, sodium methoxide, sodium ethoxide, potassium butoxide, potassium fluoride, and sodium fluoride; metals such as titanium, cobalt, tin, zinc, and aluminum; and semi-metals, to promote the reaction.

The reaction temperature in the production of the polyamide-imide resin is preferably from 60°C to 200°C, and more preferably from 100°C to 180°C. The reaction temperature equal to or higher than the lower limit can shorten the reaction time. The reaction temperature equal to or lower than the upper limit can prevent degradation of monomer components in addition to gelation due to three-dimensional reaction. The reaction may be carried out in multiple stages. The reaction time can be appropriately chosen depending on the batch size, reaction conditions employed, and especially the reaction concentration. Within the above temperature range, the reaction is preferably conducted for at least 3 hours to sufficiently increase the molecular weight.

The polymer concentration in the solid concentration is preferably from 10% by weight to 50% by weight, and particularly preferably from 20% by weight to 40% by weight in the polymerization of the polyamide-imide resin. By adjusting the solid concentration to 50% by weight or less, the increase in viscosity during synthesis can be moderated, resulting in increased agitation performance. Adjusting the solid concentration to 10% by weight or more helps to prevent a decrease in reaction rate.

The polymer concentration as the solid content of the polyamide-imide resin solution when diluted after polymerization or when electrospun is preferably from 5% by weight to 50% by weight, and particularly preferably from 10% by weight to 40% by weight. When the solid content concentration is 5% by weight or more, it ensures entanglement of the molecular chains, enabling stable spinning of fibers without beads. When the solid content is 50% by weight or less, it helps suppressing nozzle clogging and excessive increase in fiber diameter.

In addition to the above polymerization solvents, the solvent used for dilution may be any solvent that allows the polyamide-imide resin to dissolve without precipitation during dilution. Examples of the solvent include solvents with high volatility such as acetone, chloroform, ethanol, isopropanol, methanol, toluene, tetrahydrofuran, water, benzene, benzyl alcohol, 1,4-dioxane, propanol, carbon tetrachloride, cyclohexane, cyclohexanone, methylene chloride, phenol, pyridine, trichloroethane, and acetic acid; and solvents with relatively low volatility such as N,N-dimethylformamide (DMF), dimethyl sulfoxide (DMSO), N,N-dimethylacetamide (DMAc), 1-methyl-2-pyrrolidone (NMP), ethylene carbonate, propylene carbonate, dimethyl carbonate, acetonitrile, N-methylmorpholine-N-oxide, butylene carbonate, γ-butyrolactone, diethyl carbonate, diethyl ether, 1,2-dimethoxyethane, 1,3-dimethyl-2-imidazolidinone, 1,3-dioxolane, ethyl methyl carbonate, methyl formate, 3-methyloxazolidin-2-one, methyl propionate, 2-methyltetrahydrofuran, and sulfolane. During spinning, if the solvent contains a relatively high proportion of volatile components, rapid evaporation may lead to resin precipitation, causing nozzle clogging and possible increase in fiber diameter due to precipitation and solidification with insufficient stretching. Conversely, if the solvent contains a relatively low proportion of volatile components, evaporation may proceed slowly, resulting in a fiber containing beads and a large amount of residual solvent. Hence, N,N-dimethylacetamide (DMAc), cyclohexanone, and dimethyl sulfoxide (DMSO) are preferred from the view point of adequate volatilization rate, and N,N-dimethylacetamide (DMAc) and cyclohexanone are particularly preferred from the viewpoint of storage stability of a polymer among them. Two or more of these solvents may be mixed and used.

In the present invention, the polyamide-imide fiber may contain additives such as an inorganic or organic filler to improve various characteristics of the nonwoven fabric obtained by spinning. In the case of an additive with low affinity for polyamide-imide, the additive preferably has the size smaller than the diameter of the obtained polyamide-imide fiber. The additive greater than the fiber's diameter may precipitate during electrospinning, causing yarn breakage. Methods for adding additives include a method of pre-adding the required amount of additives into the reaction system of polyamide-imide polymerization or a method of adding the required amount of additives after the completing of polyamide-imide polymerization. For additives that do not inhibit polymerization, the former method is preferable as it allows for uniform dispersion of additives in the nonwoven fabric.

In the method of adding the required amount of the additive after the completion of the polyamide-imide polymerization, agitation such as ultrasonic stirring, or mechanically forced stirring using a homogenizer or a bead mill is employed.

### <Polyamide-imide fiber>

The polyamide-imide fiber of the present invention preferably has an average fiber diameter of from 0.001 µm to 1 µm, more preferably from 0.005 µm to 0.8 µm, and further preferably from 0.01 µm to 0.5 µm. The average fiber diameter within the range can greatly expand the industrial applicability, for example, a filter with low pressure loss and a waterproof breathable membrane. A fiber with an average fiber diameter of less than 0.001 µm is difficult to be produced, and the fiber may have a problem in mechanical strength even if it is produced. On the other hand, a fiber with an average fiber diameter of more than 1 µm has small surface area, disadvantageously leading to a nonwoven fabric having equivalent performance to conventional nonwoven fabric.

A method for producing the polyamide-imide fiber of the present invention is not particularly limited and the polyamide-imide fiber is preferably produced by electrospinning method. Hereinafter, detailed description of the electrospinning method will be given.

### <Electrospinning method>

The electrospinning method as used herein is a kind of solution spinning. Generally, it involves applying a positive high voltage to a polymer solution and causing fiber formation as it is sprayed onto a surface charged with ground or negative potential. An example of an electrospinning apparatus is illustrated in Fig. 1. In Fig. 1, the electrospinning apparatus 1 includes the spinning nozzle 2 for ejecting a polymer, which serves as the raw material for the fibers, and the counter electrode 5 facing the spinning nozzle 2. This counter electrode 5 is grounded. The polymer solution, charged with high voltage, is ejected from the spinning nozzle 2 toward the counter electrode 5. During this process, a fiber is formed. A solution containing polyamide-imide dissolved in an organic solvent is ejected into an electrostatic field created between the electrodes, then the discharged solution is drawn toward the counter electrode, and a fibrous material is formed and accumulates on a collection plate, resulting in a nonwoven fabric.

The solution vessel 3 is not particularly limited as long as the material of the vessel has resistance to an organic solvent used in the present invention. The solution in the solution vessel 3 can be ejected into an electric field by various methods such as mechanical extrusion or the method using a pump for aspiration.

The spinning nozzle 2 preferably has an internal diameter of approximately from 0.1 mm to 3 mm. The material of the nozzle may be metal or non-metal. When the nozzle 2 is made of metal, the nozzle can be used as an electrode of a pair of electrodes. When the nozzle 2 is made of non-metal, the non-metal nozzle may have an electrode provided inside the nozzle to apply an electric field to the ejected solution. A plurality of nozzles may be used to increase production efficiency. Typically, the nozzle with circular cross section are used, and depending on the type of polymer and the intended application, a nozzle with modified cross section may also be used.

As the counter electrode 5, electrodes of various shapes, such as a roll-shaped electrode as shown in Fig. 1, or a plate- or belt-shaped metal electrode may be used depending on purpose.

In the above description, the electrode also functions as a plate for collecting fibers. Alternatively, a plate that can act as a collector may be disposed between the electrodes to collect polyamide-imide fibers on it. In the latter case, for example, a belt-shaped plate may be provided between the electrodes to achieve continuous production.

Typically, a pair of electrodes is used to form a fiber, and additional electrode may be further introduced. In this case, spinning is carried out by a pair of electrodes, and the spinning condition can be controlled by regulating the electric field state with the introduced electrode having different potential.

The high-voltage power supply 4 is not particularly limited, and a direct-current high-voltage generator or a Van de Graaff electrostatic generator may be used. The applied voltage is not particularly limited, and is generally from 3 kV to 100 kV, preferably from 5 kV to 50 kV, and more preferably from 5 kV to 30 kV. The polarity of the applied voltage is preferably set to positive. This is because the equivalent mobility value of negative ions, which contribute to conductivity in gases, is different from that of positive ions by approximately four times, and the polarity of the applied voltage set to negative causes rapid occurrence of spark discharges.

The distance between the electrodes depends on factors such as the amount of electric charge, nozzle dimensions, solution flow rate, and solution concentration, and the distance of from 5 cm to 20 cm is suitable for the applied voltage of from 10 kV to 15 kV.

Spinning is typically conducted in an air atmosphere. Electrospinning conducted in a gas with higher discharge onset voltage than air, such as carbon dioxide, allows for spinning at lower voltage and prevents abnormal electrical discharge such as corona discharge. If water is a poor solvent for a polymer, the polymer may precipitate in the vicinity of the spinning nozzle. Hence, spinning is preferably conducted in an environment with as low humidity as possible.

### <Nonwoven fabric>

Hereinafter, the production step of the nonwoven fabric by aggregation of fibers on a collection plate will be described. In the present invention, during the process of spinning the solution towards the collection plate, the solvent volatilizes depending on conditions, resulting in the formation of fibrous material. Although the solvent completely volatilizes before collection of a fibrous material on the collection plate under room temperature condition, spinning may be conducted under reduced pressure if the solvent volatilizes insufficiently. A fiber of the present invention is formed at latest when the fibrous material is collected on the collection plate. A spinning temperature is determined depending on the volatilization behavior of the solvent and a viscosity of the spinning solution, and the temperature is normally from 0°C to 50°C. A nonwoven fabric is produced through further aggregation of porous fibers on the collection plate.

The nonwoven fabric of the present invention has a basis weight determined according to the purpose of use, and is not particularly limited. The nonwoven fabric has a basis weight of, for example, preferably from 0.05 g/m² to 50 g/m² for air filter applications. The basis weight as used herein is a value determined in accordance with JIS L 1085. The basis weight of 0.05 g/m² or less is not preferred due to the low collection efficiency of filter. The basis weight of 50 g/m² or more is not preferred due to too high ventilation resistance of filter.

The thickness of the nonwoven fabric of the present invention is determined according to the purpose of use and is not particularly limited, and the thickness is preferably from 1 µm to 100 µm. The "thickness" as used herein is a value measured with a micrometer.

The nonwoven fabric of the present invention may undergo post-treatment, if necessary, to suit various applications. Examples of the post-treatment include calendaring for densification or arranging thickness accuracy, hydrophobic treatment, water-repellent treatment, surfactant adhesion treatment, and washing treatment with pure water.

The nonwoven fabric produced according to the present invention may be used alone or in combination with another member depending on handleability and applications. For example, a collection plate may be formed from a material that can also function as a supporting substrate, such as cloth (nonwoven fabric, woven fabric, and knit fabric), a film-, drum-, net-, flat plate-, or belt- shaped conductive material made of metal or carbon, and a non-conductive material made of organic polymers and having the shape above described. By forming a nonwoven fabric on the supporting substrate, a member including the nonwoven fabric combined with the supporting substrate can be obtained.

The applications of the nonwoven fabric obtained according to the present invention includes various air filter applications such as a bag filter, an air cleaner filter, a filter for a precision apparatus, a cabin filter for automobiles and trains, an engine filter, and an air conditioner filter for buildings. In particular, the nonwoven fabric can be effectively used for applications requiring thermal resistance, mechanical strength, and thermal dimensional stability, such as air purification; liquid filter applications such as an oil filter; an electronics applications such as an insulating substrate of a light, small, short, and thin electronic circuit, a diaphragm for a secondary battery in which internal temperature becomes high during discharge and charge, a separator for electronic component, and a dialysis membrane for components of a fuel cell. Especially, the nonwoven fabric can be effectively used in applications involving exposure to high temperatures. Further, the nonwoven fabric can be used in various applications including a lining material for medical artificial organs and as carriers for immobilization in cell cultures and bioreactors.

The separator for electronic component obtained according to the present invention includes the above-described nonwoven fabric. A separator for electronic component serves as a constituent material to prevent short-circuits caused by contact between an anode and a cathode inside the battery. In general, separators for electronic components are porous film-like materials made from polyethylene or polypropylene. However, the separator for electronic component of the present invention utilizes nonwoven fabric, allowing for high porosity. Further, because the fibers forming the nonwoven fabric has a small fiber diameter, there is no need to increase the film thickness to prevent short-circuits, enabling miniaturization and weight reduction.

The separator for electronic component of the present invention can be obtained through electrospinning conducted directly on the electrode used by the electrospinning method described above.

### EXAMPLES

Hereinafter, the present invention will be described with Examples, and the scope of the present invention is not limited to Examples. Measurement for inspection items in Examples was conducted according to the following methods.

### <Number average molecular weight>

The number average molecular weight of the polyamide-imide resin was measured under the following conditions. The molecular weight was calculated based on the standard polystyrene.
Apparatus: HLC-8220GPC, manufactured by Tosoh Corporation
Column: TSKgel SuperAWM-H + TSKgel SuperAW2500
Solvent: DMAc/30 mM lithium bromide (LiBr) + 60 mM phosphoric acid
Flow rate: 0.35 ml/min
Concentration: 0.05%
Injection volume: 10 µl
Temperature: 40°C
Detector: Refractive index detector (RI)

### <Glass transition temperature (Tg)>

The polyamide-imide resin solution was applied to a Teflon sheet and heated at 140°C for 3 minutes to be dried. The resulting polyamide-imide film having a thickness of 25 µm was cut to have a width of 4 mm and a length of 15 mm and measured using a dynamic viscoelastic analyzer (model: DVA-220, manufactured by IT Keisoku Seigyo Co., Ltd.). The film was mechanically vibrated at a frequency of 110 Hz, and heated up to 400°C at a temperature increase rate of 4°C/min from room temperature. The glass transition temperature (Tg) was determined from the temperature corresponding to the maximum value of loss tangent (tanδ) of dynamic viscoelasticity.

### <Electrospinning conditions>

Spinning was carried out with each of polyamide-imide resin solutions described in the following Examples and Comparative Examples for 10 minutes using apparatus illustrated in Fig. 1. A 18G needle (inner diameter: 0.8 mm) was attached to the spinning nozzle 2. A voltage of from 10 kV to 17 kV was applied to eject the solution, and the solution was ejected at a flow rate of from 1 ml/min to 5 ml/min. The distance between the spinning nozzle 2 and the fibrous material-collecting electrode 5 covered with aluminum foil was 15 cm.

### <Average fiber diameter>

Scanning electron microscope images were taken on the surface of the nonwoven fabric produced by spinning under the above conditions (5000× magnification). All the fibers in the microscope image were individually numbered, and 10 fibers were selected using random number. The diameters of the selected 10 fibers were measured, and the average fiber diameter was calculated from the measurement results. The resulting average fiber diameter was evaluated according to the following criteria.
Good: An average fiber diameter of 0.001 µm or more and less than 0.5 µm.
Acceptable: An average fiber diameter of 0.5 µm or more and 1.0 µm or less.
Bad: An average fiber diameter of more than 1.0 µm.

### <Spinning stability>

Spinning was carried out under the above conditions, and spinning stability was evaluated according to the following criteria.
Good: Spinning was continuously carried out without a single interruption.
Acceptable: Though spinning was interrupted at a frequency of more than once per 10 minutes and less than once per 10 seconds, few fiber clumps and beads were generated.
Bad: Spinning was interrupted at a frequency of more than once per 10 seconds, and lots of fiber clumps and beads were generated.

### <Nozzle clogging>

Spinning was carried out under the above conditions, and nozzle clogging was evaluated according to the following criteria.
Good: Continuous spinning was carried out without a single nozzle clogging at its tip.
Bad: Spinning was interrupted due to precipitation of solidified resin product at the nozzle tip.

### <Example 1>

A four-necked flask equipped with a thermometer, a condenser tube, and a nitrogen gas introduction tube was charged with 0.95 parts by mole of trimellitic anhydride (TMA), 0.05 parts by mole of monosodium 5-sulfoisophthalate (SSIPA), 1.00 part by mole of diphenylmethane diisocyanate (MDI), 0.01 parts by mole of 1,8-diazabicyclo[5,4,0]-7-undecene (DBU) together with N,N-dimethylacetamide (DMAc) to give a mixture having a solid concentration of 35%. Then, the mixture was initially stirred at 80°C for 2 hours, followed by subsequent stirring at 110°C for 1 hour, and the mixture was further stirred at 150°C for about 3 hours to synthesize a polyamide-imide resin. The polyamide-imide resin synthesized was diluted with N,N-dimethylacetamide (DMAc) to give a polyamide-imide resin solution having a solid concentration of 33%. The polyamide-imide resin obtained had a number average molecular weight of 15000 and a glass transition temperature of 310°C.

### <Examples 2 to 8, and 10 to 12 and Comparative Examples 1 and 2>

Polyamide-imide resins were synthesized in the same manner as Example 1 with the exception that the polyamide-imide resins synthesize had compositions shown in Table 1 by changing types and quantitative ratios of raw materials. Each of the polyamide-imide resins synthesized was diluted to give a solution. The polyamide-imide resins obtained had number average molecular weights and glass transition temperatures presented in Table 1.

### <Example 9>

A polyamide-imide resin was synthesized in the same manner as Example 1 except that the mixture obtained was stirred at 80°C for 2 hours first and was further stirred at 110°C for 1 hour. The polyamide-imide resin synthesized was diluted to give a solution. The polyamide-imide resin obtained had a number average molecular weight of 6800. A glass transition temperature was not measurable due to breakage of a film for measurement.

### <Comparative Example 3>

To the DMAc solution (100 parts by mass as solid) of polyamide-imide resin prepared in Comparative Example 1, 1.2 parts by mass (based on the solute content) of lithium chloride (LiCl) in the form of a DMAc solution having a LiCl concentration of 5% by mass was added.

**[Table 1]**

| | | Examples | | | | | | | | | | | | Comparative Examples | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 1 | 2 | 3 |
| Polyamide-imide resin composition [mol%] | SSIPA | 2.5 | | | 1 | 20 | 2.5 | 5 | 0.5 | 2.5 | | 12.5 | 12.5 | | | |
| | PHEBS | | 2.5 | | | | | | | | 15 | | | | | |
| | TBPSI | | | 2.5 | | | | | | | | | | | | |
| | TMA | 47.5 | 47.5 | 47.5 | 49 | 30 | 42.5 | 45 | 49.5 | 47.5 | 35 | 35 | 35 | 50 | 45 | 50 |
| | BisDA | | | | | | 5 | | | | | 2.5 | 2.5 | | 5 | |
| | MDI | 50 | 50 | 50 | 50 | 50 | 50 | | 50 | 50 | 50 | 50 | | 50 | 50 | 50 |
| | TDI | | | | | | | 10 | | | | | 10 | | | |
| | ToDI | | | | | | | 40 | | | | | 40 | | | |
| Additive [*] \| | LiCl | | | | | | | | | | | | | | | 1.2 |
| Glass transition temperature [°C] | | 310 | 303 | 288 | 302 | 287 | 296 | 311 | 309 | Not measurable | 285 | 289 | 308 | 307 | 300 | 307 |
| Number average molecular weight | | 15000 | 12000 | 13000 | 15000 | 11000 | 13000 | 21000 | 22000 | 6800 | 10000 | 12000 | 20000 | 11000 | 12000 | 11000 |
| Average fiber diameter [µm] | | 0.3 Good | 0.3 Good | 0.4 Good | 0.7 Acceptable | 0.2 Good | 0.3 Good | 0.4 Good | 0.9 Acceptable | 0.3 Good | 0.3 Good | 0.2 Good | 0.3 Good | 1.5 Bad | 1.4 Bad | 0.3 Good |
| Spinning stability | | Good | Good | Good | Good | Acceptable | Good | Good | Good | Acceptable | Acceptable | Acceptable | Acceptable | Good | Good | Bad |
| Nozzle clogging | | Good | Good | Good | Good | Good | Good | Good | Good | Good | Good | Good | Good | Good | Good | Bad |

| | | | | | | | | | | | | | | | | |
|---|---|---|---|---|---|---|---|---|---|---|---|---|---|---|---|---|
| * Amounts (parts by mass) with respect to 100 parts by mass of polyamide-imide resin | | | | | | | | | | | | | | | | |

Abbreviations used in Table 1 are as follows.
SSIPA: Monosodium 5-sulfoisophthalate
PHEBS: Potassium 2,5-bis(hydroxyethoxy)benzenesulfonate
TBPSI: Tetrabutylphosphonium 3,5-dicarboxybenzenesulfonate
TMA: Trimellitic anhydride
BisDA: 2,2-Bis[4-(3,4-dicarboxyphenoxy)phenyl]propane dianhydride
MDI: Diphenylmethane-4,4'-diisocyanate
TDI: Tolylene-2,4- or tolylene-2,6-diisocyanate
ToDI: 3,3'-Dimethylbiphenyl-4,4'-diisocyanate
LiCl: Lithium chloride

As shown in Table 1, nanofibers each having a fine fiber diameter of 1 µm or less and a uniform fiber diameter were stably spun from the polyamide-imide resins comprising a constitutional unit derived from an organic acid salt compound. In contrast, since the polyamide-imide resins in Comparative Examples 1 and 2 did not contain a constitutional unit derived from an organic acid salt compound, each of the resulting fibers had a fiber diameter of more than 1 µm, and reductions of fiber diameters were not achieved. Although, the polyamide-imide resin in Comparative Example 3 contained an inorganic metal salt and formed a fiber with a fine fiber diameter, spinning was discontinuous and unstable, and increases in solution viscosity and hygroscopicity caused nozzle clogging during spinning.

### INDUSTRIAL APPLICABILITY

By containing constitutional unit derived from an organic acid salt compound, the polyamide-imide resin of the present invention can form a fiber with a significantly fine fiber diameter by electrospinning. Such a fiber allows a separator used in battery to have high porosity and reduced thickness, enabling improved battery capacity and output. Furthermore, a nonwoven fabric formed from the fiber is applicable in various fields, such as a filter with low pressure loss and an alternative membrane, thereby greatly contributing to industry.

### EXPLANATION OF LETTERS OR NUMERALS

1: Electrospinning apparatus
2: Spinning nozzle
3: Solution vessel
4: High-voltage power supply
5: Counter electrode (collection plate)

## Claims

1. A polyamide-imide resin comprising a constitutional unit derived from an organic acid salt compound.

2. The polyamide-imide resin according to claim 1, wherein a content of the constitutional unit derived from an organic acid salt compound is from 0.1 mol% to 25 mol% based on 100 mol% of the total constitutional units of the polyamide-imide resin.

3. The polyamide-imide resin according to claim 1 or 2, wherein the organic acid salt compound is a metal organic acid salt compound.

4. The polyamide-imide resin according to claim 1 or 2, wherein the organic acid salt compound is a sulfonic acid metal salt compound.

5. The polyamide-imide resin according to claim 1 or 2, wherein the organic acid salt compound is a 3,5-dicarboxybenzenesulfonic acid metal salt.

6. The polyamide-imide resin according to any one of claims 1 to 5, wherein the polyamide-imide resin has a number average molecular weight of 7000 or more and 30000 or less.

7. A polyamide-imide fiber spun from the polyamide-imide resin according to any one of claims 1 to 6.

8. A nonwoven fabric comprising the polyamide-imide fiber according to claim 7 as a constitutional material.

9. A separator for electronic component including the nonwoven fabric according to claim 8.

10. A method for producing a nonwoven fabric, wherein the nonwoven fabric is formed by spinning a solution dissolving a polyamide-imide resin containing a constitutional unit derived from an organic acid salt compound and an organic solvent by electrospinning method to form polyamide-imide fibers and collecting the polyamide-imide fibers on a collection plate.
